# EUROPEAN PATENT SPECIFICATION

(11) **EP 3 444 485 B1**
(45) Date of publication and mention of the grant of the patent: **15.01.2020**
(21) Application number: 17186118.0
(22) Date of filing: 14.08.2017
(51) Int. Cl.: F16B 5/06, B60R 13/02, F16B 21/07

(54) **FASTENER AND FASTENING ARRANGEMENT**
BEFESTIGUNGSELEMENT UND BEFESTIGUNGSELEMENTEANORDNUNG
FIXATION ET ENSEMBLE DE FIXATION

(43) Date of publication of application: 20.02.2019
(73) Proprietor: Newfrey LLC, New Britain, CT 06053 (US)
(72) Inventor: STAU, Bastian, 35394 Gießen (DE); ROSEMANN, Frank, 35394 Gießen (DE); BRUMM, Mathias, 35394 Gießen (DE); HAHN, Ernst-Ludwig, 35394 Gießen (DE)
(74) Representative: SBD IPAdmin

(56) References cited:
- EP-A2- 2 145 795
- US-A1- 2004 170 469

## Description

The invention relates to a fastener and to a fastening arrangement. More particularly, the present invention relates to fasteners, in particular for fixing a panel, for instance a trim strip, to a support such as a vehicle body. The fastener comprises a receptacle part having an aperture with a lateral opening and a guide slot, the aperture being surrounded by a lateral wall and a bottom wall, and a connecting part having an insertion opening adapted to accommodate a stud, a flange adapted to be introduced in the aperture through the lateral opening, a fastening section comprising hooks and a guide section adapted to be inserted in the guide slot. Additionally the invention relates to a fastening arrangement comprising a fastener, in particular for fixing a panel to a support and a stud.

Such fasteners and fastening arrangements are for example used in automotive industry for fastening trim parts and attached parts to the vehicle body or to body parts such as doors and the like. Fastening there should be accomplished in the simplest possible manner and without or only few aid of tools. Besides, there is frequently a need for such fasteners and fasteners arrangement to be able to compensate for dimensional variations of the parts in the vicinity of the fastener and to deal with possible high forces in case of a crash.

Various fasteners of the specified type are known from EP 0,020,308 A1, EP 1,895,171 A2, US 6,196,607 B1, for example. The prior art fasteners have in common that an element in the shape of a stud is provided as the connecting part and is joined to the support part in a latching manner by insertion through an opening in the support part. It is a disadvantage here that the support part must have openings at the fastening points and that additional means such as a dished washer and possibly additional sealing rings must be provided so that these openings can be tightly sealed during installation of the attached parts or trim parts.

Document EP2145795A2 also discloses a fastener arrangement comprising a receptacle part, a connecting part, and a stud, wherein the connecting part can be connected to both the receptacle part and the stud. The receptacle part is suitable for attachment to an attached part or a trim part, and can also be an integral part of the attached part or trim part. Such fastening arrangements are proving satisfactory, but there is still a need to decrease the weight of such arrangements and to improve their compactness.

The object of the present invention is to go some way towards solving or at least mitigating the problems set out above. The invention aims to provide a light and compact fastener and fastening arrangement.

To this aim, according to the invention, it is provided a fastener as described above characterized in that the hooks project from the flange along the longitudinal axis, and the connecting part further comprises a spring plate having a base body and spring elements projecting from the base body and inclined with regard to the longitudinal axis, and the guide section extends between the flange and the spring plate, the guide section having a reduced cross-section compared to the flange and to the base body, such that the bottom wall is sandwiched between the base body and the first flange.

The design of such fasteners, with the hooks extending from the flange allows a good compactness and a good retention of the stud. The spring plate, located outside the receptacle part allows a compensation of the dimensional variations without decreasing the retaining forces of the connecting part in the receptacle part.

In some embodiments, the bottom wall has an inner surface and outer surface, and the base body abuts against the outer surface. The base body extends outside of the aperture.

In some embodiments, the connecting part comprises a plurality of spring elements, which are uniformly distributed around the longitudinal axis, a slot being provided between two adjacent spring elements. The plurality of spring elements allows a better dimensional compensation along the longitudinal axis without damaging the connecting and/or the receptacle part.

In some embodiments, the spring elements have a first end connected to the base body and a second end, which is a free end.

In some embodiments, the spring elements extend radially outward from the base body, and the spring elements can be elastically deflected along the longitudinal axis.

In some embodiments, the hooks are uniformly distributed around the longitudinal axis, and the hooks can extend radially inward from the flange. The hooks allow to centre the stud.

In some embodiments, the lateral wall comprises a first and a second lateral side extending parallel to each other, each of the first and second lateral side having a first end portion and a second end portion, the first end portions of the first and second lateral side being connected to each other through curved side. The receptacle part is thus compact.

In some embodiments, the second end portions of the first and second lateral side are connected to each other through a third side perpendicular to the first and second lateral sides

In some embodiments, the third side partly defines the lateral opening. The edges of the third side form the edges of the lateral opening.

In some embodiments, the distance between outer surfaces of the first and second lateral side is between 20 millimetres and 30 millimetres, and preferably between 20 and 25 millimetres. The receptacle part is compact.

In some embodiments, the height of the lateral wall along the longitudinal axis is between 10 and 20 millimetres, and preferably between 12 and 16 millimetres. When a trim element is attached to the receptacle part, the distance between the trim element and a body element is thus kept between 10 and 20 millimetres, and preferably between 12 and 16 millimetres.

In some embodiments, the guide slot comprises a bevelled entry section that grows larger toward the outside, and a circular receiving section.

In some embodiments, the bevelled entry section allows the insertion of the flange and the fastening section in the circular receiving section and prevent a non-authorized released of the connecting part. The guide section does not need to be exactly aligned with the guide slot to allow the insertion.

In some embodiments, the guide section has a circular cross section. The circular cross-section matches the circular receiving section allowing a possible rotation between the connecting part and the receptacle part.

In some embodiments, the receptacle part comprises a top opening facing the bottom wall and through which the hooks are accessible. This allow to dismount the assembly or arrangement if necessary.

In some embodiments, a supportive rib projects from the flange along the longitudinal axis. This allows to protect the hooks from lateral loads.

In some embodiments, a spring carrier extends from the second surface of the flange.

In some embodiments, the connecting part is snap-fitted in the receptacle part. This allow to dismount easily the assembly or arrangement if necessary.

According to another embodiment of the invention there is provided a fastening arrangement with a fastener as described above. The fastening arrangement further comprises a stud comprising a shank, a head located at a first end of the shank, and an attachment end formed at a second end of the shank, a body part, the attachment end being fixed to the body part, and the head has a diameter greater than the shank, and has, on the underside facing the shank, a shoulder, wherein the shank extends through the insertion opening and the shoulder rests against a free end of the hooks.

In some embodiments, the hooks and the head of the stud cooperate together in a snap fit connection.

In some embodiments, the attachment end is welded to the body part.

Other characteristics and advantages of the invention will readily appear from the following description of embodiments, provided as non-limitative examples, in reference to the accompanying drawings.

In the drawings:
Fig. 1 shows a perspective view of a fastener with a receptacle part and a connecting part according to the invention and a stud;
Fig. 2 shows a perspective view of the receptacle part of Fig. 1;
Fig. 3 shows a perspective view of the connecting part of Fig. 1;
Fig. 4 shows a side view of a fastening arrangement according to the invention with the fastener and the stud of Fig. 1 mounted together on a body part;
Fig. 5 shows a perspective view of the fastening arrangement of Fig. 4;
Fig. 6 shows a perspective view of an alternative embodiment of a connecting part of a fastener according to the invention;
Fig. 7 shows a cross sectional view of a fastening arrangement with the connecting part of Fig. 6.

On the different figures, the same reference signs designate identical or similar elements.

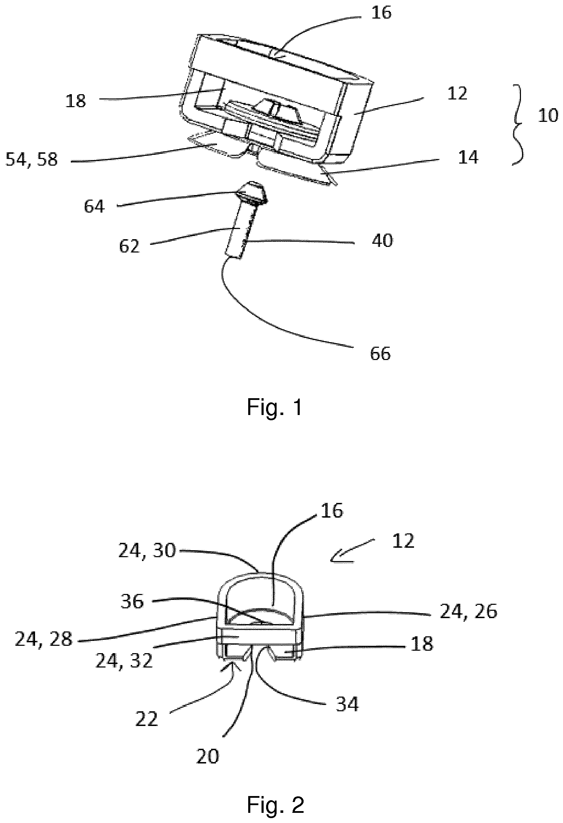

Fig. 1 shows a fastener 10 according to the present invention. The fastener 10 comprises a receptacle part 12 and a connecting part 14. The connecting part 14 is connected to the receptacle part 12 through a snap-fit connection. The receptacle part 12 and the connecting part 14 are for example made of thermoplastic material.

As visible in Fig. 2, the receptacle part 12 comprises an aperture 16 with a lateral opening 18 and a guide slot 20. The aperture 16 is surrounded by a bottom wall 22 and a lateral wall 24. The lateral wall 24 comprises a first lateral side 26 and a second lateral side 28. The first and second lateral sides 26, 28 extend parallel or substantially parallel to each other. A curved side 30 connects the first and second lateral sides 26, 28. The curved side 30 is arc-shaped or semi-circular. A third side 32 may also extend opposite the curved side 30 to connect the first and second lateral side 26, 28 to each other. The third lateral 32 side is for instance substantially perpendicular to the first and second lateral side 26, 28. In another embodiment (not shown), the third lateral side 32 is optional and can be removed.

As shown in Fig. 2, the third lateral side 32 extends from a front face toward the bottom wall 22 of the receptacle part 12, but does not extend until the bottom wall 22. The third lateral side 32 and the bottom wall 22 define the edges of the lateral opening 18, and therefore the geometry of the lateral opening 18. As illustrated, the third lateral side 32 extend until the middle of the first and second lateral sides 26, 28.

The guide slot 20 is formed in the bottom wall 22. The guide slot 20 comprises a bevelled entry section that grows larger toward the outside of the receptacle part 12. In other words, the entry section grows smaller toward the middle of the receptacle part until a neck 34, which form a narrow portion of the guide slot 20. The guide slot extends further after the neck with a circular or sensibly circular opening (also called circular receiving section) 36.

The aperture 16 and the circular opening 36 are adapted to receive the connecting part 14.

The distance between outer surfaces of the first and second lateral side 26, 28 is between 20 millimetres and 30 millimetres, and preferably between 20 and 25 millimetres, or between 22 and 25 millimetres. The height of the lateral wall along the longitudinal axis is between 10 and 20 millimetres, and preferably between 12 and 16 millimetres, or between 13 and 15 millimetres.

The receptacle part 12 may have a U-shaped cross section in a plane perpendicular to the longitudinal axis X. The receptacle part 12 is for example made of thermoplastic material.

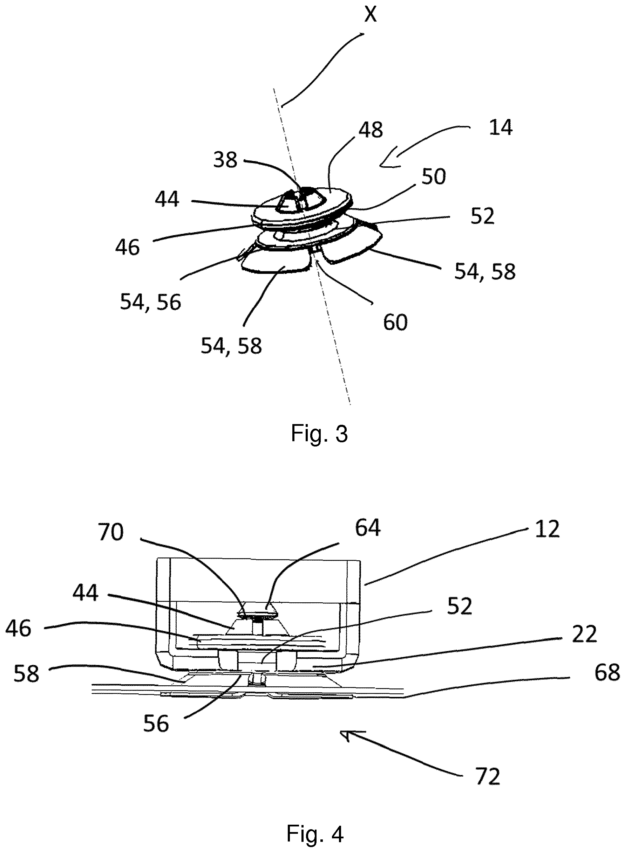

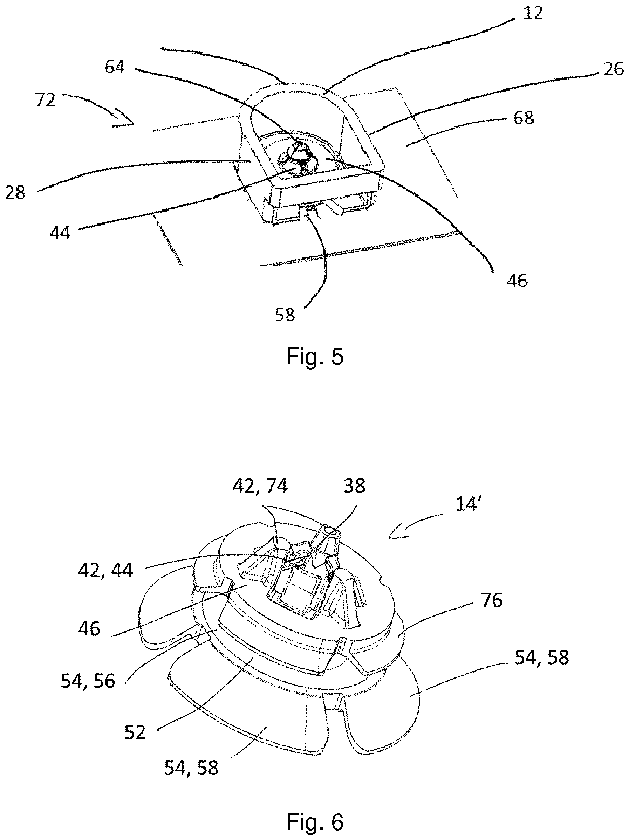

Fig. 3 illustrates more particularly the connecting part 14. Fig. 6 illustrates the connecting part 14' according to an alternative embodiment. The connecting part 14, 14' comprises an insertion opening 38 adapted to accommodate a stud 40. The insertion opening 38 extends through the connecting part 14, 14' along a longitudinal axis X. The connecting part 14, 14' is for example provided with a circular symmetrical profile around the longitudinal axis X and the insertion opening 38 is centred in the connecting part 14, 14'. The connecting part 14, 14' is for example made of thermoplastic material.

The connecting part 14, 14' further comprises a flange 46 adapted to be introduced in the aperture 16 of the receptacle part 12 through the lateral opening 18. The flange 46 comprises for example a circular cross section and is provided with a circular symmetrical profile around the longitudinal axis X. The flange 46 comprises a first surface 48 and a second surface 50, the second surface 50 being opposite the first surface 48. The first surface 48 of the flange 46 may be parallel to the second surface 50 of the flange 46. The first and/or the second surface 48, 50 of the flange 46 may extend in a plane perpendicular to the longitudinal axis X.

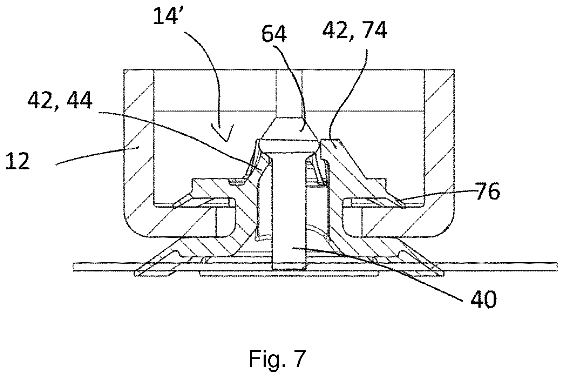

In the embodiment of Fig. 6 and 7, the flange 46 of the connecting part 14' further comprises a spring carrier 76 extending from the second surface 50 of the flange 46. The spring carrier 76 comprises for example four elements regularly distributed around the longitudinal axis X.

A fastening section 42 comprising hooks 44 extends from the flange 46. For instance, the hooks 44 project from the flange along the longitudinal axis X. More particularly, the hooks 44 project from the first surface 48 of the flange 46. The hooks 44 extend radially inward from the flange 46. The hooks 44 may be uniformly distributed around the longitudinal axis X.

For example, in the embodiment of Fig. 3, four hooks are provided, but in other embodiments more or less hooks might be considered. A gap is provided between two adjacent hooks. The hooks 44 form elastic tongues which can be radially elastically deflected. The hooks partly define the insertion opening 38. The hooks 44 have a first end connected to the flange 46 and a free end opposite the first end. The free end form an end portion of the connecting part 14.

In the embodiment of Fig. 6, the fastening section 42 comprises hooks 44 and supportive rib 74. More particularly, three hooks 44 are provided. Between two adjacent hooks 44 a supportive rib 74 is provided. For example, three supportive ribs 74 may be provided. The supportive rib 74 extends from the flange 46 along the longitudinal axis X. The length of the supportive rib 74 along the longitudinal axis is greater than the length of the hooks 44 along the longitudinal axis. The supportive rib 74 comprises for example a base connected to the flange 46 and extends along the longitudinal axis with a reduced cross-section until a free end.

The connecting part 14, 14' further comprises a guide section 52. The guide section 52 is adapted to be inserted in the guide slot 20 of the receptacle part 12. The guide section 52 extends from the second surface 50 of the flange 46. The guide section 52 comprises for example a circular cross-section with a diameter which is smaller than the diameter of the flange 46. Actually the guide section 52 comprises a reduced cross section compared to the cross section of the flange 46.

A spring plate 54 extends from the guide section 52. In other words, the guide slot 52 extends between the spring plate 54 and the flange 46. The spring plate 54 is adapted to elastically deflect along the longitudinal axis X. The spring plate 54 comprises a base body 56 and a spring element 58 projecting from the base body 56. The base body 56 may have a circular cross section with a diameter greater than the diameter of the guide section 52. The guide section 52 comprises a reduced cross section compared to the cross section of the base body 56.

The spring element 58 is inclined with regard to the longitudinal axis X. The spring element 58 comprises a first end connected to the base body 56 and a second end, which is a free end. The cross section of the spring element in the vicinity of its second end is greater than the cross section of the spring element in the vicinity of its first end.

As represented in Fig. 3, the spring plate 54 comprises a plurality of spring elements 58. The spring element 58 are for example uniformly distributed around the longitudinal axis X. A slot 60 is provided between two adjacent spring elements 58. Four spring elements 58, as illustrated in the figures, may be provided. However, in other embodiments more or less than four spring elements 58 can be provided. The spring elements 58 extend radially outward from the base body 56 and can be elastically deflected along the longitudinal X.

The connecting part 14 is adapted to be snap-fitted in the receptacle part 12, as better seen in Fig. 1, Fig. 4, Fig. 5 and Fig. 7. More particularly, the connecting part 14, 14' engages the receptacle part 12 through the guide slot 20. The guide section 52 cooperates with the entry section of the guide slot 20 and is moved beyond the neck 34 until the guide section 52 cooperates with the circular opening 36. The neck 34 allows the snap fit connection.

The flange 46 and the fastening section 52 extends in the aperture 16. The spring plate 54 extends outside of the aperture 16. For instance the bottom wall 22 is sandwiched between the flange 46 and the base body 56.

As seen in Fig. 1, Fig. 4 and Fig. 5, the flange 46 and the base body 56 form two abutment portions avoiding any translational motion of the connecting part 14 in the receptacle part 12 along the longitudinal axis X.

As seen in Fig. 7, the flange 46 (and more particularly the spring carrier 76) and the base body 56 form two abutment portions avoiding any translational motion of the connecting part 14' in the receptacle part 12 along the longitudinal axis X. The spring carrier 76 allow avoiding a rattling of the connecting part 14, 14' in the receptacle part 12.

As previously mentioned, the insertion opening 38 adapted to receive the stud 40. The stud 40 is for example made of metal. The stud 40 shown in FIG. 1 has a cylindrical shank 62 and a head 64.The head 64 is located at one end of the shank 62 and has a larger diameter than the shank 62. The end of the shank 62 opposite the head 64 is an attachment end 66 and is intended for fastening the stud 40 to a body part 68. The body part 68 can be a metal sheet and the stud can be fasten to the body part 68 by welding the attachment end 66 to the body part 68, as illustrated in Fig. 4 and Fig. 5.

Once the connecting part 14, 14' has been inserted in the receptacle part 12, the fastener 10 is moved, with the connecting part 14 forward, towards the body part 68 and the stud 40 in such a way that the stud 40 can enter the insertion opening 38.

The head 64 has for example a centre cylindrical section, adjoined on the top opposite the shank 62 by a domed cap, which facilitates the insertion of the head 64 through the insertion opening 38, and in particular through the hooks 44. The underside of the head 64 opposite the cap forms a shoulder 70. The shoulder 70 serves as a contact surface or as an abutment surface for the free end of the hooks 44. The hooks are for example inclined in order to centre the stud 40.

The connecting part 14, 14', receptacle part 12, the stud 40 and the body part 68 thus form a fastening arrangement 72.

The spring plate 54 limits the depth to which the stud 40 can penetrate the connecting part 14 and the aperture 16.

Pressing the fastener 10 onto the body part 68 causes the stud 40 to be pressed into the insertion opening 38 until the free end of the spring elements rests against the body part 68 and the head 64 rests against the free end of the hooks 44, as shown in Fig. 4, Fig. 5 and Fig. 7. This position corresponds to the endpoint of the stud 40 in the fastener 10.

The head 64 of the stud 40 is held after reaching the endpoint. The hooks 44 (and its latching fingers) are initially spread apart by the head 64, and then spring back to the position shown in Fig. 4 and Fig. 5, in which they brace against the shank 62 and the shoulder 70. In this position, the hooks 44 hold the stud 40 securely. A trim part (not shown) can be connected to the connecting part 14, 14' by the receptacle part 12 and thus the trim part is held on the body part 68 through the stud 40 and the fastener 10.

As illustrated in Fig. 7, the supportive rib 74 of the connecting part 14' rests or abuts against the head 64 of the stud 40. More particularly, the supportive rib 74 laterally abuts against the head 64 of the stud 40. The hooks abuts against the underside of the head 64. The supportive rib 74 allows the hooks 44 to be loaded with axial forces during a disassembly. The protective rib 74 protects the hooks 44 from lateral forces. The supportive rib 74 thus contributes to a lowest possible variation of the pull-off forces during the disassembly of the stud from the fastener.

The fastener 10, with the hooks 44 provided in the aperture 16 and the spring plate provided outside the aperture 16 compensate dimensional variations, notably through the spring elements.

The receptacle part 12 may comprise a top opening which allows accessibility to the hooks 44. Thus a quick dismounting of the fastening arrangement 72 is possible without damaging the different parts.

## Claims

1. Fastener (10) comprising:
a. a receptacle part (12) having an aperture (16) with a lateral opening (18) and a guide slot (20), the aperture (16) being surrounded by a lateral wall (24) and a bottom wall (22),
b. a connecting part (14) adapted to be fitted with the receptacle part (12), the connecting part (14) having:
i. an insertion opening (38) adapted to accommodate a stud (40) with a head (64) and a shank (62), and extending through the connecting part (14) along a longitudinal axis (X),
ii. a flange (46) adapted to be introduced in the aperture (16) through the lateral opening (18),
iii. a fastening section (42) comprising elastic hooks (44),
iv. a guide section (52) adapted to be inserted in the guide slot (20),
**characterized in that**
the hooks (44) project from the flange (46) along the longitudinal axis (X), and
the connecting part (14) further comprises a spring plate (54) having a base body (56) and a spring element (58) projecting from the base body (56), the spring element (58) being inclined with regard to the longitudinal axis (X), and the guide section (52) extends between the flange (46) and the spring plate (54), the guide section (52) having a reduced cross-section compared to the flange (46) and to the base body (56), such that the bottom wall (22) is sandwiched between the base body (56) and the flange (46) when the connecting part (14) and the receptacle part (12) are fitted together.

2. Fastener (10) according to claim 1, wherein the connecting part (14) comprises a plurality of spring elements (58), which are uniformly distributed around the longitudinal axis (X), a slot (60) being provided between two adjacent spring elements (58), wherein the spring elements (58) have a first end connected to the base body (56) and a second end, which is a free end, wherein the spring elements (58) extend radially outward from the base body (56), and wherein the spring elements (58) can be elastically deflected along the longitudinal axis (X).

3. Fastener (10) according to claim 1 or claim 2, wherein the hooks (44) are uniformly distributed around the longitudinal axis (X), and wherein the hooks (44) extend radially inward from the flange.

4. Fastener (10) according to any of claims 1 to 3, wherein the lateral wall (24) comprises a first and a second lateral side (26, 28) extending parallel to each other, each of the first and second lateral side (26, 28) having a first end portion and a second end portion, the first end portions of the first and second lateral side being connected to each other through curved side (30).

5. Fastener (10) according to claim 4, wherein the second end portions of the first and second lateral side are connected to each other through a third side (32) perpendicular to the first and second lateral sides (26, 28).

6. Fastener (10) according to claim 5, wherein the third side (32) partly defines the lateral opening (18).

7. Fastener (10) according to any of claims 4 to 6, wherein the distance between outer surfaces of the first and second lateral side (26, 28) is between 20 millimetres and 30 millimetres, and preferably between 20 and 25 millimetres.

8. Fastener (10) according to any of claims 1 to 7, wherein the height of the lateral wall along the longitudinal axis (X) is between 10 and 20 millimetres, and preferably between 12 and 16 millimetres.

9. Fastener (10) according to any of claims 1 to 8, wherein the guide slot (20) comprises a bevelled entry section that grows larger toward the outside, and a circular receiving section (36), and wherein the bevelled entry section allows the insertion of the flange (46) and the fastening section (42) in the circular receiving section (36) and prevents a non-authorized release of the connecting part (14).

10. Fastener (10) according to any of claims 1 to 9, wherein a supportive rib (74) projects from the flange (46) along the longitudinal axis (X), and spring carrier (76) extends from the second surface (50) of the flange (46)..

11. Fastener (10) according to any of claims 1 to 10, wherein the receptacle part (12) comprises a top opening facing the bottom wall (22) and through which the hooks (44) are accessible.

12. Fastener (10) according to any of claims 1 to 11, wherein the connecting part (14) is snap-fitted in the receptacle part (12).

13. Fastening arrangement (72) comprising:
a. a fastener (10) according to any of claims 1 to 12,
b. a stud (40) comprising a shank (62), a head (64) located at a first end of the shank (62), and an attachment end (66) formed at a second end of the shank (62),
c. a body part (68), the attachment end (66) being fixed to the body part (68),
wherein the head has a diameter greater than the shank, and has, on the underside facing the shank, a shoulder, wherein the shank extends through the insertion opening and the shoulder rests against a free end of the hooks.

14. Fastening arrangement (72) according to claim 13, wherein the hooks (44) and the head (64) of the stud (40) cooperate together in a snap fit connection.

15. Fastening arrangement (72) according to claim 13 or 14, wherein the attachment end (66) is welded to the body part (68).

## Patentansprüche

1. Befestigungselement (10), umfassend:
a. ein Behälterteil (12), das eine Öffnung (16) aufweist, mit einer lateralen Öffnung (18) und einem Führungsschlitz (20), wobei die Öffnung (16) durch eine laterale Wand (24) und eine Bodenwand (22) umgeben ist,
b. ein Verbindungsteil (14), das dafür angepasst ist, mit dem Behälterteil (12) zusammengesetzt zu sein, wobei das Verbindungsteil (14) aufweist:
i. eine Einsetzöffnung (38), die dafür angepasst ist, einen Zapfen (40) mit einem Kopf (64) und einem Schaft (62) unterzubringen, und sich durch das Verbindungsteil (14) entlang einer Längsachse (X) erstreckt,
ii. einen Flansch (46), der dafür angepasst ist, in die Öffnung (16) durch die laterale Öffnung (18) hindurch eingeführt zu sein,
iii. eine Befestigungssektion (42), die elastische Haken (44) umfasst,
iv. eine Führungssektion (52), die dafür angepasst ist, in den Führungsschlitz (20) eingesetzt zu sein,
**dadurch gekennzeichnet, dass**
die Haken (44) vom Flansch (46) entlang der Längsachse (X) vorstehen und das Verbindungsteil (14) weiter eine Federplatte (54) umfasst, die einen Grundkörper (56) und ein vom Grundkörper (56) vorstehendes Federelement (58) aufweist, wobei das Federelement (58) bezüglich der Längsachse (X) geneigt ist und die Führungssektion (52) sich zwischen dem Flansch (46) und der Federplatte (54) erstreckt, wobei die Führungssektion (52) einen verringerten Querschnitt im Vergleich zum Flansch (46) und zum Grundkörper (56) aufweist, sodass die Bodenwand (22) zwischen dem Grundkörper (56) und dem Flansch (46) sandwichartig angeordnet ist, wenn das Verbindungsteil (14) und das Behälterteil (12) zusammengesetzt sind.

2. Befestigungselement (10) nach Anspruch 1, wobei das Verbindungsteil (14) eine Vielzahl von Federelementen (58) umfasst, die gleichmäßig um die Längsachse (X) herum verteilt sind, wobei ein Schlitz (60) zwischen zwei benachbarten Federelementen (58) bereitgestellt ist, wobei die Federelemente (58) ein mit dem Grundkörper (56) verbundenes erstes Ende und ein zweites Ende, das ein freies Ende ist, aufweisen, wobei die Federelemente (58) sich radial nach außen vom Grundkörper (56) erstrecken und wobei die Federelemente (58) entlang der Längsachse (X) elastisch abgelenkt werden können.

3. Befestigungselement (10) nach Anspruch 1 oder Anspruch 2, wobei die Haken (44) gleichmäßig um die Längsachse (X) herum verteilt sind und wobei die Haken (44) sich vom Flansch radial nach innen erstrecken.

4. Befestigungselement (10) nach einem der Ansprüche 1 bis 3, wobei die laterale Wand (24) eine erste und eine zweite laterale Seite (26, 28) umfasst, die sich parallel zueinander erstrecken, wobei jede der ersten und zweiten lateralen Seite (26, 28) einen ersten Endabschnitt und einen zweiten Endabschnitt aufweist, wobei die ersten Endabschnitte der ersten und zweiten lateralen Seite durch eine gekrümmte Seite (30) miteinander verbunden sind.

5. Befestigungselement (10) nach Anspruch 4, wobei die zweiten Endabschnitte der ersten und zweiten lateralen Seite durch eine dritte Seite (32) senkrecht zu den ersten und zweiten lateralen Seiten (26, 28) miteinander verbunden sind.

6. Befestigungselement (10) nach Anspruch 5, wobei die dritte Seite (32) die laterale Öffnung (18) teilweise definiert.

7. Befestigungselement (10) nach einem der Ansprüche 4 bis 6, wobei der Abstand zwischen Außenflächen der ersten und zweiten lateralen Seite (26, 28) zwischen 20 Millimetern und 30 Millimetern und vorzugsweise zwischen 20 und 25 Millimetern beträgt.

8. Befestigungselement (10) nach einem der Ansprüche 1 bis 7, wobei die Höhe der lateralen Wand entlang der Längsachse (X) zwischen 10 und 20 Millimetern und vorzugsweise zwischen 12 und 16 Millimetern beträgt.

9. Befestigungselement (10) nach einem der Ansprüche 1 bis 8, wobei der Führungsschlitz (20) eine abgeschrägte Eintrittssektion, die nach außen hin größer wird, und eine kreisförmige Aufnahmesektion (36) umfasst und wobei die abgeschrägte Eintrittssektion das Einsetzen des Flanschs (46) und der Befestigungssektion (42) in die kreisförmige Aufnahmesektion (36) ermöglicht und eine unbefugte Freigabe des Verbindungsteils (14) verhindert.

10. Befestigungselement (10) nach einem der Ansprüche 1 bis 9, wobei eine Stützrippe (74) vom Flansch (46) entlang der Längsachse (X) vorsteht und ein Federträger (76) sich von der zweiten Fläche (50) des Flanschs (46) erstreckt.

11. Befestigungselement (10) nach einem der Ansprüche 1 bis 10, wobei das Behälterteil (12) eine obere Öffnung aufweist, die der Bodenwand (22) zugewandt ist und durch die die Haken (44) zugänglich sind.

12. Befestigungselement (10) nach einem der Ansprüche 1 bis 11, wobei das Verbindungsteil (14) in das Behälterteil (12) eingeschnappt ist.

13. Befestigungsanordnung (72), umfassend:
a. ein Befestigungselement (10) nach einem der Ansprüche 1 bis 12,
b. einen Bolzen (40), der einen Schaft (62), einen Kopf (64), der sich an einem ersten Ende des Schafts (62) befindet, und ein Anbringungsende (66), das an einem zweiten Ende des Schafts (62) gebildet ist, umfasst,
c. ein Körperteil (68), wobei das Anbringungsende (66) am Körperteil (68) fixiert ist,
wobei der Kopf einen größeren Durchmesser als der Schaft aufweist und auf der dem Schaft zugewandten Unterseite eine Schulter aufweist, wobei der Schaft sich durch die Einsetzöffnung hindurch erstreckt und die Schulter auf einem freien Ende der Haken ruht.

14. Befestigungsanordnung (72) nach Anspruch 13, wobei die Haken (44) und der Kopf (64) des Bolzens (40) in einer Schnappverbindung zusammenwirken.

15. Befestigungsanordnung (72) nach Anspruch 13 oder 14, wobei das Anbringungsende (66) am Körperteil (68) angeschweißt ist.

## Revendications

1. Fixation (10) comprenant :
a. une partie de réceptacle (12) ayant une ouverture (16) avec un orifice latéral (18) et une fente de guidage (20), l'ouverture (16) étant entourée par une paroi latérale (24) et une paroi de fond (22),
b. une partie de raccordement (14) apte à être ajustée avec la partie de réceptacle (12), la partie de raccordement (14) ayant :
i. un orifice d'insertion (38) apte à accueillir un goujon (40) avec une tête (64) et une tige (62), et s'étendant à travers la partie de raccordement (14) le long d'un axe longitudinal (X),
ii. une bride (46) apte à être introduite dans l'ouverture (16) à travers l'orifice latéral (18),
iii. une section de fixation (42) comprenant des crochets élastiques (44),
iv. une section de guidage (52) apte à être insérée dans la fente de guidage (20), **caractérisée en ce que**
les crochets (44) font saillie depuis la bride (46) le long de l'axe longitudinal (X), et
la partie de raccordement (14) comprend en outre une plaque de ressort (54) ayant un corps de base (56) et un élément de ressort (58) faisant saillie depuis le corps de base (56), l'élément de ressort (58) étant incliné par rapport à l'axe longitudinal (X), et la section de guidage (52) s'étend entre la bride (46) et la plaque de ressort (54), la section de guidage (52) ayant une coupe transversale réduite par rapport à la bride (46) et au corps de base (56), de sorte que la paroi de fond (22) soit prise en sandwich entre le corps de base (56) et la bride (46) lorsque la partie de raccordement (14) et la partie de réceptacle (12) sont ajustées ensemble.

2. Fixation (10) selon la revendication 1, dans laquelle la partie de raccordement (14) comprend une pluralité d'éléments de ressort (58), qui sont répartis uniformément autour de l'axe longitudinal (X), une fente (60) étant prévue entre deux éléments de ressort (58) adjacents, dans laquelle les éléments de ressort (58) ont une première extrémité raccordée au corps de base (56) et une seconde extrémité, qui est une extrémité libre, dans laquelle les éléments de ressort (58) s'étendent radialement vers l'extérieur depuis le corps de base (56), et dans laquelle les éléments de ressort (58) peuvent être déviés élastiquement le long de l'axe longitudinal (X).

3. Fixation (10) selon la revendication 1 ou 2, dans laquelle les crochets (44) sont répartis uniformément autour de l'axe longitudinal (X), et dans laquelle les crochets (44) s'étendent radialement vers l'intérieur depuis la bride.

4. Fixation (10) selon l'une quelconque des revendications 1 à 3, dans laquelle la paroi latérale (24) comprend des premier et deuxième côtés latéraux (26, 28) s'étendant parallèlement l'un à l'autre, chacun des premier et deuxième côtés latéraux (26, 28) ayant une première portion d'extrémité et une seconde portion d'extrémité, les premières portions d'extrémité des premier et deuxième côtés latéraux étant raccordées l'une à l'autre à travers un côté incurvé (30).

5. Fixation (10) selon la revendication 4, dans laquelle les secondes portions d'extrémité des premier et deuxième côtés latéraux sont raccordées l'une à l'autre à travers un troisième côté (32) perpendiculaire aux premier et deuxième côtés latéraux (26, 28).

6. Fixation (10) selon la revendication 5, dans laquelle le troisième côté (32) définit partiellement l'orifice latéral (18).

7. Fixation (10) selon l'une quelconque des revendications 4 à 6, dans laquelle la distance entre des surfaces extérieures des premier et deuxième côtés latéraux (26, 28) est entre 20 millimètres et 30 millimètres, et de préférence entre 20 et 25 millimètres.

8. Fixation (10) selon l'une quelconque des revendications 1 à 7, dans laquelle la hauteur de la paroi latérale le long de l'axe longitudinal (X) est entre 10 et 20 millimètres, et de préférence entre 12 et 16 millimètres.

9. Fixation (10) selon l'une quelconque des revendications 1 à 8, dans laquelle la fente de guidage (20) comprend une section d'entrée biseautée qui grandit vers l'extérieur, et une section de réception circulaire (36), et dans laquelle la section d'entrée biseautée permet l'insertion de la bride (46) et de la section de fixation (42) dans la section de réception circulaire (36) et empêche une libération non autorisée de la partie de raccordement (14).

10. Fixation (10) selon l'une quelconque des revendications 1 à 9, dans laquelle une nervure de support (74) fait saillie depuis la bride (46) le long de l'axe longitudinal (X), et un porte-ressort (76) s'étend depuis la seconde surface (50) de la bride (46).

11. Fixation (10) selon l'une quelconque des revendications 1 à 10, dans laquelle la partie de réceptacle (12) comprend un orifice de sommet faisant face à la paroi de fond (22) et à travers lequel les crochets (44) sont accessibles.

12. Fixation (10) selon l'une quelconque des revendications 1 à 11, dans laquelle la partie de raccordement (14) est encliquetée dans la partie de réceptacle (12).

13. Aménagement de fixation (72) comprenant :
a. une fixation (10) selon l'une quelconque des revendications 1 à 12,
b. un goujon (40) comprenant une tige (62), une tête (64) située à une première extrémité de la tige (62) et une extrémité d'attache (66) formée à une seconde extrémité de la tige (62),
c. une partie de corps (68), l'extrémité d'attache (66) étant fixée à la partie de corps (68),
dans lequel la tête a un diamètre supérieur à la tige et a, sur le dessous faisant face à la tige, un épaulement, dans lequel la tige s'étend à travers l'orifice d'insertion et l'épaulement repose contre une extrémité libre des crochets.

14. Aménagement de fixation (72) selon la revendication 13, dans lequel les crochets (44) et la tête (64) du goujon (40) coopèrent l'un avec l'autre dans un raccordement par encliquetage.

15. Aménagement de fixation (72) selon la revendication 13 ou 14, dans lequel l'extrémité d'attache (66) est soudée à la partie de corps (68).
